# EUROPEAN PATENT APPLICATION

(11) **EP 0 530 507 A1**
(43) Date of publication of application: **10.03.1993**
(21) Application number: 92113114.0
(22) Date of filing: 31.07.1992
(51) Int. Cl.: F16L 11/12, B32B 1/08

(54) **Antistatic plastic tube for carrying evaporable and inflammable fluids**

(30) Priority: 02.09.1991 IT MI910716 U
(71) Applicant: MAZZER MATERIE PLASTICHE, I-22037 Ponte Lambro, Como (IT)
(72) Inventor: Mazzer, Giacomo Ezio, I-22037 Ponte Lambro (Como) (IT)
(74) Representative: Liesegang, Roland, Dr.-Ing.

(57) **Abstract**

The antistatic plastic tube for carrying easily evaporable and inflammable fluids comprises an inner tube (2) which is impermeable to such fluids and an outer layer (3) of closed cells foamed material. The inner tube (2) is formed by a polyamide resin, the outer layer (3) is formed by a foamed polyester resin, and the inner tube is externally provided with a lining (4) formed by a metal strip helically wound all around thereto so as to assure the impermeability of the inner tube (2) and avoid at the same time the accumulation of electrostatic charges on the tube itself.

## Description

This invention generally relates to plastic tubes used for carrying easily evaporable and inflammable fluids, for example fuels for automotive vehicles and, more particularly, an improved antistatic plastic tube of this type capable of giving the best safety performances in this field.

Plastic tubes used for carrying easily evaporable and inflammable fluids are already known. Such tubes have been designed particularly as tubes for fuel feeding systems of automotive vehicle engines and are a consequence of technological development experienced by these systems with the coming on the market of the plastic materials.

As known, the tubes for feeding fuel are connected between the fuel tank and the carburator of the automotive vehicles and for a length of their extension they are passed under the vehicle body and therefore are exposed to the weather and to the mechanical action of the surrounding environment.

The use of plastic materials has solved nearly completely this problem because the various plastic materials, taken alone or in combination, exhibit the characteristics required for these applications. By means of such plastic materials, different types of tubes have been already developed, including tubes comprising one layer, two layers and three or more layers with or without an air jacket. Since such tubes must also resist to the shocks caused by the upward projecting bumbs or by the action of crushed stones or the shackes induced by the vehicle when it is running, as well as the abrasion occurring in the metal components, for example as the tube is fastened to the lower portion of the automotive vehicle body, also plastic tubes have been already developed which are provided with an outer layer of closed cell foamed material. Such tubes are generally comprised of an inner tube of fluoroethylene polymers and a foamed outer layer, also of fluoroethylene polymers because this plastic material is impermeable to the fuel of the automotive vehicle and exhibits all the characteristics required for these applications which are improved by the application of the outer layer of foamed material.

The fluoroethylene polymers, for example polytetrafluoroethylene, are plastic materials rather expensive and therefore the present invention aims at providing a plastic tube for carrying easily evaporable and inflammable fluids, which uses a plastic material less expensive, but which exhibits such characteristics as to be employed with the same results.

According to the present invention the antistatic plastic tube for carrying easily evaporable and inflammable fluids is of the type having an inner tube which is impermeable to such fluids and an outer layer of closed cells foamed material and is characterized in that:
- the inner tube is formed by a polyamide resin,
- the outer layer is formed by a foamed polyester resin, and
- the inner tube is externally provided with a lining formed by a metal strip helically wound all around thereto so as to assure the impermeability of the inner tube and avoid at the same time the accumulation of electrostatic charges on the tube itself.

Preferably, the inner tube is an one-layer plastic tube.

Alternatively, the inner tube can be a two-layer or three-layer plastic tube.

Suitably, the outer layer of foamed material is applied to the inner tube by a co-extrusion operation.

The present invention will be now described in more detail in connection to the accompanying drawings, wherein:
Fig. 1 is a cross section of the plastic tube according to the present invention, provided with an one-layer inner tube;
Fig. 2 is an axial section of the plastic tube of Fig. 1; and
Fig. 3 is an axial section of the inner tube provided with the outer lining comprised of a helically wound metal strip.

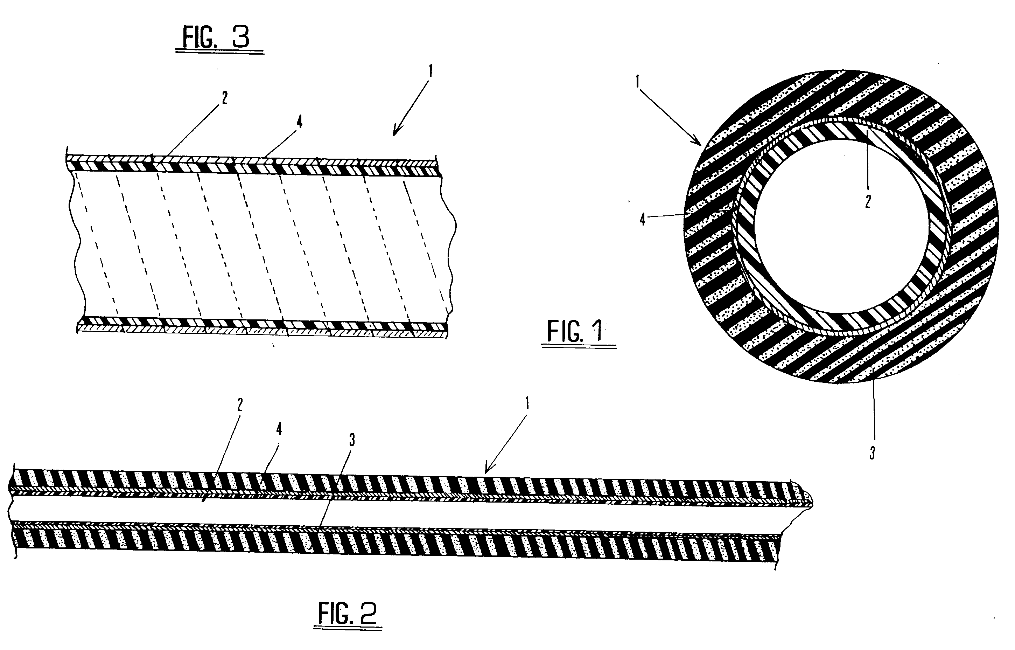

As can be seen from Fig. 1,2 and 3, the tube of plastic material for carrying easily evaporable and inflammable fluids, generally indicated by 1, has an inner tube 2 and an outer layer 3 and a liner comprised of a metal strip 4 which is helically wound on the inner tube 2.

### INNER TUBE 2

The inner tube 2 which is in direct contact with the easily evaporable and inflammable fluid is a conventional one-layer tube of polyamide resin, obtained by an extrusion operation. As known, the polyamide resins are plastic materials exhibiting a good impermeability to the fuels, a very good mechanical resistance, a good hygroscopicity, a very high wear resistance, very good vibration-damping properties and a high dimensional stability.

For this use polyamides of type 11,12 and 6 have been proved as particularly suitably.

### OUTER LAYER 3

The outer layer 3 is formed of a foamed plastic material, of the "closed cell" type, exhibiting an application temperature which is less than the deformation temperature of the polyamide tube so as to avoid a damaging of the inner tube during the application of this layer of foamed material. This outer layer 3 is comprised of a foamed polyester resin and is applied on the inner tube 2 generally by direct extrusion, i.e. the inner tube 2 is inserted in the extrusion head of an extruder and, during the passage therethrough, is coated with the foamed polyester resin. Since the temperature of application of the foamed polyester resin is lower than the deformation temperature of the polyamide, the material of the inner tube is not involved during its application.

The purpose of this outer layer 3 of foamed polyester resin is to protect the inner tube 2 against the mechanical shocks which are readily taken up thereby. Another purpose of the outer layer 3 is to thermally insulate the inner tube 2 so that it experiences only a little heating and therefore causes a little thermal expansion, thereby avoiding the formation of distorsions therein. Still another purpose of the outer layer 3 is to protect the inner tube 2 against shackes or vibrations caused by external environmental factors. A further purpose of the outer layer 3 is to protect the inner tube 2 against abrasions which could occur during the contact with outer metallic parts to which this tube 1 is applied.

The inner tube 2 is preferably comprised of one layer, having a tickness calculated so as to decrease at most the permeability of the tube to the fluid passing therethrough, in combination with the outer layer 3 of closed cell foamed plastic material. However, the inner tube 2 could be also comprised of two, three or more layers in order to increase both the impermeability to the fluid passing therethrough and the shock resistance, vibration-damping and abrasion resistance properties, always in combination with the outer layer 3 of closed cell foamed plastic material.

### METAL LINING 4

On the inner tube 2 a lining is applied which is formed by a metal strip 4 which is helically wound on the outer surface thereof. This helical winding is made so that the turns of the metal strip are closely in contact to each other. Advantageously, this helical winding is made so that the turns of the metal strip slightly overlap on each other so as to form a lining which is completely impermeable to the fuels passing through the tube according to the invention.

This metal strip 4 is preferably made of aluminum and has also the purpose to eliminate the accumulation of electrostatic charges on the inner tube 2, which charges can form both for the friction caused by the passage of the fluid in the tube and for environmental conditions. In this case the tube according to the present invention can be used with safety also in explosive atmospheres.

The tube 1 of Fig. 1 can also be provided with an outer sheath, also preferably made of polyamide resin. The purpose of this outer sheath is to protect against the abrasions and projections of crushed stones the outer layer 3 of foamed polyester resin.

Therefore, the tubes according to the present invention do not use fluoroethylene polymers for their manufacturing, materials which are rather expensive. In fact, the tubes according to the invention are comprised of an inner layer of polyamide 11,12 and 6 exhibiting a good impermeability to the fuel, but have other peculiar characteristics that the fluoroethylene polymers do not possess and which are listed in the description.

The warranty of the impermeability of the tube is given by the lining formed of a helically wound metal strip.

The best shock resistance gives the tube 1 a great safety coefficient in its practical use. Also the best resistance to the shackes or vibrations which can be caused on metal or not metal parts with burrs, upwards projecting bumps and so on assures the use of this tube in this field, particularly due to the presence of the outer layer 3 of foamed polyester resin. The outer layer 3 of "closed cell" foamed plastic material assures a low trasmission of heat to the inner tube 2 and therefore avoids a linear expansion of the tube which could lead to a deformation thereof between the points in which it is applied to the vehicle body. The presence of the aluminum strip wound lining on the inner tube 2 prevents the accumulation of electrostatic charges forming on the tube for the above described reasons, thereby avoiding a danger of explosion and tube breakages.

From the foregoing it can be seen that the tube according to the present invention offers the following advantages:
1) It permits the use of polyamide resin for the manufacturing of the inner tube which must be impermeable to the fuels.
2) The presence of the helically wound aluminum strip assures the absolute impermeability of the inner tube of polyamide resin and avoids at the same time the accumulation of electrostatic charges.
3) The outer layer of foamed polyester resin is very reliable in its application because the foamed polyester resin is applied at temperatures which do not involve the polyamide resin material forming the inner tube.

## Claims

1. Antistatic plastic tube for carrying easily evaporable and inflammable fluids, of the type having an inner tube (2) which is impermeable to such fluids and an outer layer (3) of closed cells foamed material, characterized in that:
- the inner tube (2) is formed by a polyamide resin,
- the outer layer (3) is formed by a foamed polyester resin, and
- the inner tube is externally provided with a lining (4) formed by a metal strip helically wound all around thereto so as to assure the impermeability of the inner tube (2) and avoid at the same time the accumulation of electrostatic charges on the tube itself.

2. Antistatic plastic tube according to claim 1, characterized in that the inner tube (2) is an one-layer plastic tube.

3. Antistatic plastic tube according to claim 1, characterized in that the inner tube (2) is a two-layer or three-layer plastic tube.

4. Antistatic plastic tube according to anyone of the preceding claims, characterized in that the outer layer (3) of foamed material is applied to the inner tube (2) by a co-extrusion operation.

5. Anti static plastic tube according to anyone of the preceding claims, characterized in that it is provided of an outer protective sheath of plastic material.
